# EUROPEAN PATENT APPLICATION

(11) **EP 2 953 081 A1**
(43) Date of publication of application: **09.12.2015**
(21) Application number: 14305852.7
(22) Date of filing: 05.06.2014
(51) Int. Cl.: G06Q 30/02

(54) **Method of building a user profile**

(71) Applicant: Thomson Licensing, 92130 Issy-les-Moulineaux (FR)
(72) Inventor: Bayadat, Youssef Akram, 92443 Issy-les-Moulineaux cedex (FR); Vigneri, Luigi, 92443 Issy-les-Moulineaux cedex (FR); Chandrashekar, Jaideep, 92443 Issy-les-Moulineaux cedex (FR)
(74) Representative: Browaeys, Jean-Philippe

(57) **Abstract**

Method of building a user profile, comprising:
- collecting (18) from at least one user terminal information concerning an interest of the user on at least one topic, said information being associated with a scope indicating a context in which the information is valid; and
- building (22) a profile of the user on the basis of the collected information and the scope.

## Description

### FIELD OF THE INVENTION

The present invention generally relates to the field of content recommendation.

More particularly, the invention deals with the provision of relevant information to a user, for instance in the context of targeted advertising.

Thus, the invention provides a method of building a user profile. It also concerns a user terminal able to build a user profile and a computer program implementing the method of the invention.

### BACKGROUND OF THE INVENTION

The approaches described in this section could be pursued, but are not necessarily approaches that have been previously conceived or pursued. Therefore, unless otherwise indicated herein, the approaches described in this section are not prior art to the claims in this application and are not admitted to be prior art by inclusion in this section.

Nowadays, targeted advertisements provided on connected user terminals, like desktops, cell-phones and tablets, are based on profiles of users generally extracted from online interactions of the users. Concretely, websites track users over long periods of time, and based on this extensive tracking, user profiles are constructed and used to select advertisements adapted to said user profiles.

At a very high level, an end-user profile is built upon inferred interest categories from observations of the end-user behavior. If a user visits many websites about a certain topic, such as a determined category of products, then it may be inferred that the user is interested in this category of products. Thus, there is a likelihood that if the user were to be shown an advertisement about this category of products sales, this advertisement would be relevant for said user, at least more than advertisements about another category of products.

Other methods to select advertisements involve using geographic locations of the user. This is the case, for instance, for the advertisements about local shops, restaurants, etc.

However, this very coarse grained profiling results very often in advertisements that are not directly relevant for the user.

For instance, supposing that a user visits a lot of shoes websites but has no intent of buying shoes. The same user also visits a lot of websites to read reviews about particular cameras, perhaps as a birthday present to be purchased within ten days. Online advertisers would then infer that this user is a likely target for advertisements about "shoes" and "cameras". However, it is clear that advertisements about shoes are not relevant for the user, as he is only interested in cameras for the near future.

This example shows that it is difficult to infer when users might be interested in viewing particular advertisements based on the data collected about them.

Users are likely to want and will respond to advertisements about things they wish to purchase in the near future, or about things that will bring them a positive benefit. This notion of positive benefit is challenging, if not impossible, to guess based on collected data.

Another problem with the existing methods is that users have very limited control over the advertisements that are actually delivered to them. Some web services, today, offer end users dashboards where users are allowed to remove particular inferred interests from their profiles. While this mechanism is useful and allows some customization, it is not sufficiently efficient to deliver only the advertisements that users would like to be shown.

### SUMMARY OF THE INVENTION

The present invention proposes a solution for improving the situation.

Accordingly, the present invention provides a method of building a user profile, comprising:
- collecting from at least one user terminal information concerning an interest of the user on at least one topic, said information being associated with a scope indicating a context in which the information is valid; and
- building a profile of the user on the basis of the collected information and the scope.

Contrarily to the existing methods, the present invention allows the users to associate a scope with any information related to them. This scope indicates that the information is valid in some contexts and is not valid in other contexts. Thus, a user profile built knowing said scope is more relevant.

Advantageously, the context comprises a time period and/or a location.

By associating the information with a time period, the user indicates that the information will be useful for him inside this time period, and not useful outside of this time period. This corresponds to the "cameras" example discussed previously.

By associating the information with a location, the user indicates that the information is useful/relevant when he is inside this location, and not outside.

For instance, the information may be "I am interested with buying a watch" and the scope may be : "this information is valid until July 5, 2014 when I am near a store that sells watches".

According to an embodiment, collecting information comprises collecting an address of at least one web page accessed by the user terminal.

Preferably, the address is a Uniform Resource Locator, URL.

Advantageously, the scope associated with the information is identified by a label supplied by the user.

Preferably, the label is supplied when the user terminal accesses the web page.

An example of label is "birthday present" which incorporates the temporal and/or spatial context.

The method comprises grouping together the collected addresses having the same label.

Advantageously, building the profile comprises :
- identifying keywords in the accessed web pages associated with a same scope;
- defining the profile as a set comprising the identified keywords.

For example, let's consider that the user visits a number of websites that have information about watches, and particularly, websites that have information about a particular type of watches. The possible set of keywords that may result from these websites could be "watches", "luxury goods", "retailing", "timepieces". This set of keywords constitutes one profile of the end-user, and will be associated with the defined scope having the label "birthday present".

Advantageously, the method comprises a modification of the profile by the user.

Thus, the user is allowed to edit and refine the profile generated automatically. The user may review the generated profile by removing or adding items.

For instance, in the previous example, the user may remove "retailing" and "luxury" goods from the profile if he is specifically interested in watches.

In addition, the user may be allowed to modify the scope itself, for example by modifying the time scope and/or by further filtering the location scope.

The invention also provides a first user terminal comprising:
- a collector module operable to collect from at least one second user terminal information concerning an interest of the user on at least one topic, said information being associated with a scope indicating a context in which the information is valid;
- a profile manager operable to build a profile of the user on the basis of the collected information and the scope.

Advantageously, the second user terminal is the first user terminal or another user terminal.

The method according to the invention may be implemented in software on a programmable apparatus. It may be implemented solely in hardware or in software, or in a combination thereof.

Since the present invention can be implemented in software, the present invention can be embodied as computer readable code for provision to a programmable apparatus on any suitable carrier medium. A carrier medium may comprise a storage medium such as a floppy disk, a CD-ROM, a hard disk drive, a magnetic tape device or a solid state memory device and the like.

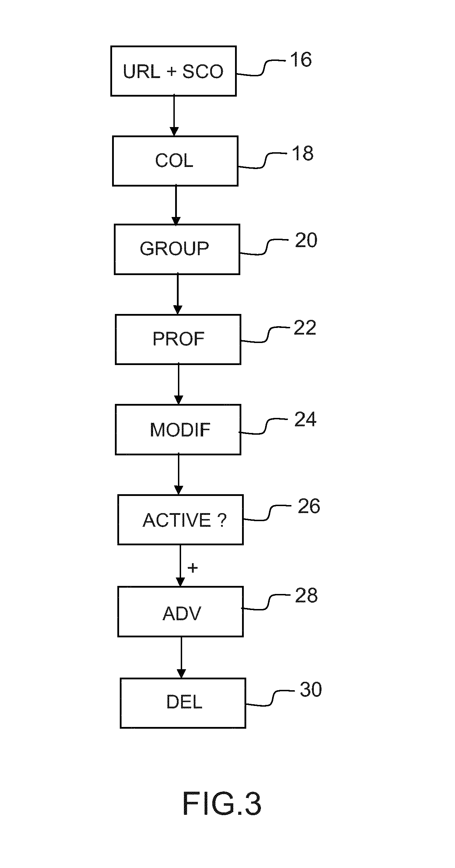

The invention thus provides a computer-readable program comprising computer-executable instructions to enable a computer to perform the method of the invention. The diagram of Figure 3 illustrates an example of the general algorithm for such computer program.

### BRIEF DESCRIPTION OF THE DRAWINGS

The present invention is illustrated by way of examples, and not by way of limitation, in the figures of the accompanying drawings, in which like reference numerals refer to similar elements and in which:
- Figure 1 is a schematic view of a system implementing the method of building a user profile according to an embodiment of the invention;
- Figure 2 illustrates the structure of a user terminal according to an embodiment of the invention; and
- Figure 3 is a flowchart showing the steps of the method of building a user profile according to an embodiment of the invention.

### DETAILED DESCRIPTION OF PREFERRED EMBODIMENTS

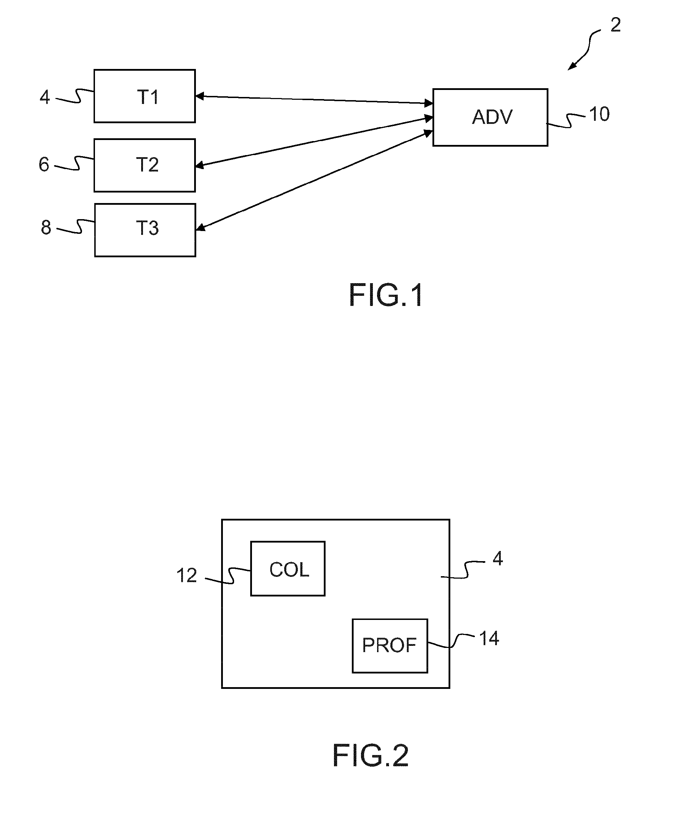

Referring to Figure 1, there is shown therein a schematic view of an advertising system 2 as an example of implementation of an embodiment of the invention.

According to the advertising system 2, a user having a plurality of user terminals 4, 6, 8 may receive advertisements on different services and/or products from at least one advertisement server 10 connected to said user terminals through an internet network.

The user terminals 4, 6, 8 may comprise a smartphone, a tablet, a laptop, etc.

According to an embodiment of the invention, one of the user terminals, for instance the user terminal 4, called in the following description first user terminal 4, is able to build at least one user profile comprising information concerning the interest of the user on a particular topic. The first user terminal 4 is also able to provide to the advertisement server 10 the built user profile in order for the user to receive from said advertisement server 10 suitable advertisements relevant for him on the user terminals 4, 6, 8.

The first user terminal 4 is preferably a mobile terminal, for instance the user's smartphone.

The structure of the first user terminal 4, according to an embodiment of the invention, is represented on Figure 2.

The first user terminal 4 comprises a collector module 12 operable to collect from the user terminals 4, 6, 8 information concerning an interest of the user on at least one topic. Said information is advantageously associated with a scope indicating a context in which the information is valid.

The first user terminal 4 also comprises a profile manager 14 operable to automatically build a profile of the user on the basis of the collected information and the scope.

The flowchart of Figure 3 illustrates the steps of the method of building a user profile of the invention implemented by the first user terminal 4, according to an embodiment of the invention. At step 16, the user, using one or a plurality of the user terminals 4, 6, 8 searches for information online about particular items of interest. For this, he accesses to websites that have price information or reviews about these items of interest.

When accessing these websites, the user is advantageously invited to define a scope associated with each visited website. The scope indicates a context in which the information is valid, for instance a time period and/or a location.

If the user does not explicitly associate a scope with an accessed website, said website is associated with a default scope. For instance, this default scope may be considered as a universal scope without restriction to a given context.

According to an embodiment, the scope is identified by a label supplied by the user.

For example, the label may be "Dad's birthday present" and incorporates a temporal context, e.g. "valid till July 5, 2014" and/or a location context, e.g. "near watch shops".

At step 18, the collector module 12 collects from the user terminals 4, 6, 8 the URLs generated by the user when searching for information online about particular items of interest. For example, these URLs are those of websites that have price information or reviews about a particular product or service.

At step 20, the profile manager 14 groups together the collected addresses having the same label.

At step 22, the profile manager 14 builds a profile of the user for each group of collected addresses corresponding to a particular label.

In order to perform this profiling, the profile manager 14 analyzes each accessed web page with said label, and extracts contextual information about the page, such as for example topics, keywords, concepts, website category, etc.. This may be done locally, or more easily by interacting with online services that are able to perform this analysis. The profile manager 14 then defines a profile, for instance, as a reductive form of this meta data. One such instantiation would simply associate with the scope, the keywords that are common to all the accessed web pages.

For example, supposing that the user visits a number of websites that have information about watches, and particularly, websites that have information about a particular type of watch. The possible set of keywords that may result from these websites could be "watches", "luxury goods", "retailing", "timepieces". This set of keywords constitutes one profile of the end-user, and will be associated with the defined scope having the label "birthday present".

Optionally, at step 24, the user may edit and refine the built profiles, for instance by removing or adding items.

For instance, in the previous example, the user may remove "retailing" and "luxury" goods from the profile if he is only interested in watches.

In addition, the user may be allowed to modify the scope itself, for example by modifying the time scope and/or by further filtering the location scope.

The user may also clone a new scope from a default scope.

At step 26, performed at a determined frequency, the profile manager 14 identifies if there are user profiles with scopes active in a given context.

Then, the first terminal 4 shares these user profiles with the advertisement server 10.

In order to identify active scopes, the profile manager 14 goes through all the built user profiles and requests information from a third party application, such as for example "Google Places", about businesses of interest close by.

To follow the example, as the user, equipped with the first user terminal 4, is moving around a city, the profile manager 14 can periodically query if there are any watch stores in close proximity to the end-user.

If the third party application returns a non-empty set of results, the first user terminal 4 sends, at step 28, the corresponding user profile to the advertisement server 10. The advertisement server 10 will then return related advertisements.

Advantageously, the communication between the profile manager 14 and the advertisement server 10 can happen in a number of ways and cover several trust models.

In the simplest case, the advertisement server 10 is a trusted entity and the user profile is shared with said advertisement server 10 in a clear form.

In the case where the advertisement server 10 is not trusted and the user does not wish to disclose the user profiles directly, private matching algorithms can be applied. For instance, an encrypted form of the user profile is shared with the advertisement server 10. The advertisement server 10 can then extract the actual keywords and carry out the matching with advertisements.

When the temporal scope of a user profile expires, the profile manager 14 deletes, at step 30, the associated user profile.

While there has been illustrated and described what are presently considered to be the preferred embodiments of the present invention, it will be understood by those skilled in the art that various other modifications may be made, and equivalents may be substituted, without departing from the true scope of the present invention. Additionally, many modifications may be made to adapt a particular situation to the teachings of the present invention without departing from the central inventive concept described herein. Furthermore, an embodiment of the present invention may not include all of the features described above. Therefore, it is intended that the present invention is not limited to the particular embodiments disclosed, but that the invention includes all embodiments falling within the scope of the appended claims.

Expressions such as "comprise", "include", "incorporate", "contain", "is" and "have" are to be construed in a non-exclusive manner when interpreting the description and its associated claims, namely construed to allow for other items or components which are not explicitly defined also to be present. Reference to the singular is also to be construed to be a reference to the plural and vice versa.

A person skilled in the art will readily appreciate that various parameters disclosed in the description may be modified and that various embodiments disclosed and/or claimed may be combined without departing from the scope of the invention.

For instance, the method of building profiles according to the invention can be implemented locally on each user terminal. The profile building could also be offloaded to a central server accessible by all the user terminals.

## Claims

1. Method of building a user profile, comprising:
- collecting (18) from at least one user terminal (4, 6, 8) information concerning an interest of the user on at least one topic, said information being associated with a scope indicating a context in which the information is valid; and
- building (22) a profile of the user on the basis of the collected information and the scope.

2. Method of claim 1, wherein the context comprises a time period and/or a location.

3. Method of claim 1 or 2, wherein collecting (18) information comprises collecting an address of at least one web page accessed by the user terminal (4, 6, 8).

4. Method of claim 3, wherein the address is a Uniform Resource Locator, URL.

5. Method of any one of claims 1 to 4, wherein the scope associated with the information is identified by a label supplied by the user.

6. Method of claim 3 and 5, wherein the label is supplied when the user terminal (4, 6, 8) accesses the web page.

7. Method of claim 6, comprising grouping (20) together the collected addresses having the same label.

8. Method of any one of claims 1 to 7, wherein building (22) the profile comprises :
- identifying keywords in the accessed web pages associated with a same scope;
- defining the profile as a set comprising the identified keywords.

9. Method of any of claims 1 to 8, comprising a modification (24) of the profile by the user.

10. First user terminal (4) comprising:
- a collector module (12) operable to collect from at least one second user terminal (4, 6, 8) information concerning an interest of the user on at least one topic, said information being associated with a scope indicating a context in which the information is valid;
- a profile manager (14) operable to build a profile of the user on the basis of the collected information and the scope.

11. First user terminal of claim 10, wherein the second user terminal (4, 6, 8) is the first user terminal (4) or another user terminal (6, 8).

12. Computer-readable program comprising computer-executable instructions to enable a computer to perform the method of any one of claims 1 to 9.
